# EUROPÄISCHE PATENTSCHRIFT

(11) **EP 1 845 689 B1**
(45) Veröffentlichungstag und Bekanntmachung des Hinweises auf die Patenterteilung: **16.01.2019**
(21) Anmeldenummer: 07007007.3
(22) Anmeldetag: 04.04.2007
(51) Int. Cl.: H04L 29/06

(54) **VERFAHREN UND KOMMUNIKATIONSSYSTEM ZUM BEREITSTELLEN EINES PERSONALISIERBAREN ZUGANGS ZU EINER GRUPPE VON EINRICHTUNGEN**
METHOD AND COMMUNICATION SYSTEM FOR PROVIDING PERSONALISED ACCESS TO A GROUP OF DEVICES
PROCÉDÉ ET SYSTÈME DE COMMUNICATION DESTINÉS À LA PRÉPARATION D'UN ACCÈS PERSONNALISABLE À UN GROUPE DE DISPOSITIFS

(30) Priorität: 12.04.2006 DE 102006017765
(43) Veröffentlichungstag der Anmeldung: 17.10.2007
(73) Patentinhaber: Deutsche Telekom AG, 53113 Bonn (DE)
(72) Erfinder: Friese, Ingo, 12589 Berlin (DE); Kurze, Martin, 12355 Berlin (DE); Heuer, Jörg, 14163 Berlin (DE)
(74) Vertreter: Kampfenkel, Klaus

(56) Entgegenhaltungen:
- EP-A- 1 610 528
- WO-A-01/11845

## Beschreibung

Die Erfindung betrifft ein Verfahren, mit welchem wenigstens einem Teilnehmer eines Kommunikationssystems ein personalisierbarer Zugang zu einer Gruppe von Diensten, Systemen und/oder Anwendungen, insbesondere webbasierter Dienste und/oder Anwendungen, bereitgestellt wird. Ferner betrifft die Erfindung ein Kommunikationssystem zum Bereitstellen eines personalisierbaren Zugangs zu einer Gruppe von Diensten, Systemen und/oder Anwendungen wenigstens einem Teilnehmer.

Identitätsmanagementsysteme, kurz auch IMS genannt, werden in IT-Umgebungen und insbesondere in Verbindung mit dem Internet immer häufiger eingesetzt. Identitätsmanagementsysteme dienen unter Anderem dazu, persönliche Daten, wie z. B. Benutzernamen, Accounts oder Paßwörter von Nutzern zu verwalten, und die Authentisierung eines Benutzers sowie dessen Zugriff auf Dienste und/oder Anwendungen unter Verwendung personenbezogener Daten steuern zu können.

Um einem Benutzer eine anwendungs- und dienstübergreifende Authentisierung zu ermöglichen, werden heutzutage bestimmte Kommunikationsprotokolle z. B. auf der Grundlage der Security Assertion Markup Language (SAML) verwendet, welche von der OASIS (Organization for the Advancement of Structured Information Standards) entwickelt worden ist.

Mit Hilfe eines SAML-Protokolls können sicherheitsbezogene Informationen beschrieben und übertragen werden. Unter Nutzung des SAML-Protokolls kann sich ein Nutzer beispielsweise mit Hilfe eines sogenannten Single-Sign-On-Verfahrens an einem Web-Dienst anmelden, indem er beispielsweise seinen Nutzernamen und sein Paßwort eingibt. Anschließend kann der Nutzer weitere Dienste oder Anwendungen nutzen, ohne sich erneut authentisieren zu müssen. Hierzu werden persönliche sicherheitsbezogene Informationen, wie z. B. Nutzername, Geburtstag, und Paßwort föderiert, d. h. die sicherheitsbezogenen Informationen der beteiligten Dienste verweisen aufeinander. Zum Beispiel weiß ein Dienst A darüber Bescheid, dass ein Nutzer bei einem Dienst B unter einem bestimmten Identifikationscode, auch Namensidentifizierer oder Name Identifier genannt, bekannt ist. Unter Verwendung des "Name Identifier" kann die Authentisierung eines Nutzers für einen Dienst auch beim Zugriff auf andere Dienste genutzt werden. Dies ist ein Kernelement bei einem föderierten Identitätsmanagementsystem. Die Dienste, welche die Authentisierung der jeweils anderen Dienste akzeptieren, befinden sich in einem gegenseitigen Vertrauensverhältnis, welches auch als Circle of Trust (COT) bekannt ist.

Aus der EP 1 610 528 A2 ist ein Identitätsmanagementsystem bekannt, welches wenigstens einen Authentifizierungsknoten aufweist, an welchem sich ein Teilnehmer gegenüber einem Netzwerk authentisieren kann. Zudem enthält das bekannte Identitätsmanagementsystem einen sogenannten "Identity Assertion"-Knoten der dafür verantwortlich ist, einen Identitätsnachweis eines zuvor authentisierten Teilnehmers zu einer Entität zu übertragen, welche einen solchen Identitätsnachweis anfordert und eine Berechtigung hat, eine solche zu erhalten.

Aus der WO 01/11845 A2 ist eine Sicherheitsarchitektur bekannt, welche ein Single-Sign-On-Verfahren bereitstellt, um Benutzern einen berechtigen Zugang zu mehreren Informationsquellen zu ermöglichen. Anstelle eines einzigen Authentifizierungsschema, welches für alle Informationsquellen definiert ist, werden den Informationsquellen verschiedene Vertrauensstufen bzw. Vertrauenstypen zugeordnet.

Weiterhin sind Rollenmanagementsysteme bekannt, die Nutzern spezifische Rollen oder Teilidentitäten verleihen. Bei diesen Rollen kann es sich beispielsweise um Administrator-, Poweruser- und User-Rollen handeln. Diese Rollen gestatten dem Nutzer einen personalisierten Zugang zu ausgewählten Anwendungen und/oder Diensten, da die Rollen nutzerspezifische Daten und nutzerabhängige Berechtigungen enthalten können. Denn bestimmte Leistungsmerkmale einer Anwendung können nur mit einer Berechtigung, welche der speziellen Rolle verliehen wurde, genutzt werden. Beispielsweise hat ein Administrator die Berechtigung Systemdateien zu löschen, was einem normalen Nutzer nicht gestattet ist. Um beispielsweise die Administrator-Rolle in einer Anwendung zu erlangen, muß sich der Nutzer gegenüber der Anwendung authentisieren, d. h. den Nachweiß erbringen, der Nutzer zu sein, der er vorgibt zu sein. Dazu wird beispielsweise eine Login-Paßwort-Kombination oder eine SmartCard-basierte Authentisierung verwendet. Die Administrator-Rolle für die entsprechende Anwendung kann der Nutzer anschließend wählen.

Bei den heute eingesetzten Identitätsmanagementsystemen und den derzeit angebotenen Formen des Rollenmanagements ist zwar, wie eingangs erwähnt, eine anwendungs- und/oder diensteübergreifende Authentisierung eines Nutzers möglich. Allerdings können Nutzern zugewiesene Rollen oder Teilidentitäten nicht anwendungs- und diensteübergreifend genutzt werden. Diese Rollen sind auf einzelne Anwendungen, Dienste und/oder Systeme beschränkt. So kann ein Nutzer mit der Administratorrolle in einem System A aber nicht ohne weiteres in einem System B mit der Administratorrolle tätig werden. Nicht möglich ist es bisher, dass ein Nutzer mit einer vorbestimmten Teilidentität verschiedene Dienste unter dieser Teilidentität nutzen kann.

Der vorliegenden Erfindung liegt demzufolge die Aufgabe zu Grunde, ein Verfahren sowie ein Kommunikationssystem zum Bereitstellen eines personalisierbareren Zugangs zu einer Gruppe von Einrichtungen, insbesondere von Diensten und/oder Anwendungen, verfügbar zu machen, mit denen die Nachteile der eingangs genannten Verfahren und Systeme beseitigt werden.

Ein Kerngedanke der Erfindung ist darin zu sehen, ein Identitätsmanagementsystem, bei welchem man sich über den sogenannten Single-Sign-On-Dienst lediglich einmal anmelden muß, um auf eine Gruppe von Diensten, Anwendungen und/oder Systeme zugreifen zu können, um ein Rollenmanagement derart zu erweitern, dass ein Nutzer die ihm zugewiesene Rolle oder Teilidentität dienste- und/oder anwendungsübergreifend nutzen kann. Eine Rolle kann beispielsweise festlegen, ob ein Nutzer dienstlich oder privat in Erscheinung treten möchte. Auf diese Weise kann der Zugang zu der Gruppe von Diensten, Anwendungen und/oder Systeme, die in einem gegenseitigen Vertrauensverhältnis stehen, personalisiert werden. Zudem können die ausgewählten Dienste und/oder Anwendungen in Abhängigkeit von der dem Nutzer zugeordneten Rolle ausgeführt werden. Zusätzlich kann die Integration eines derartigen Rollenmanagements in ein Identitätsmanagementsystem einem Nutzer eine Teilanonymität den Anwendungen und Diensten gegenüber gewährleisten. Denn den angeforderten Anwendungen und/oder Diensten werden nur die personenbezogenen Informationen mitgeteilt, die durch die dem Nutzer zugeordnete Teilidentität definiert sind.

Das oben genannte technische Problem wird zum einen durch die Verfahrensschritte des Anspruchs 1 gelöst.

Danach ist ein Verfahren vorgesehen, mit welchem wenigstens einem Teilnehmer eines Kommunikationssytems ein personalisierbarer Zugang auf eine Gruppe von Einrichtungen bereitgestellt wird.

An dieser Stelle sei angemerkt, dass der Begriff "Einrichtung" in der Beschreibung und in den Ansprüchen Dienste, vorzugsweise Kommunikationsdienste, Anwendungsprogramme und Systeme oder Systemkomponenten erfasst. Weiterhin sei an dieser Stelle darauf hin gewiesen, dass unter einer Gruppe von Einrichtungen vorzugsweise Einrichtungen zu verstehen sind, die sich in einem gegenseitigen Vertrauensverhältnis befinden.

Ein eine Einrichtung nutzender Teilnehmer authentisiert sich einmalig am Kommunikationssystem. Hierdurch erhält der Teilnehmer die Zugangsberechtigung zu der Gruppe von Einrichtungen. Dem authentisierten Teilnehmer wird dann aus einer Vielzahl von vorbestimmten Teilidentitäten, auch Rollen genannt, eine Teilidentität zugeordnet. Der vorbestimmten Teilidentität wird wiederum ein Identifizierungscode zugeordnet. Der Teilnehmer wählt wenigstens eine Einrichtung aus der Gruppe aus. Unter Verwendung des Identifizierungscodes wird der Teilnehmer gegenüber der ausgewählten Einrichtung authentisiert. Die Authentisierung gegenüber der ausgewählten Einrichtung erfolgt beispielsweise dadurch, dass das Kommunikationssystem der Einrichtung gegenüber bestätigt, dass der Teilnehmer am Kommunikationssystem bereits authentisiert, d. h. angemeldet worden ist. Hierzu wird ferner der Identifizierungscode zur ausgewählten Einrichtung übertragen. In Abhängigkeit von der dem Identifizierungscode zugeordneten Teilidentität wird dem Teilnehmer der Zugang zu der ausgewählten Einrichtung bereitgestellt.

Vorteilhafte Weiterbildungen sind Gegenstand der Unteransprüche.

Um einem Teilnehmer einen flexiblen, an seine Bedürfnisse anpaßbaren Zugang zu der Gruppe von Einrichtungen zu ermöglichen, werden dem Teilnehmer mehrere Teilidentitäten zugeordnet.

Um vorhandenen Speicherplatz effizient nutzen und einen effizienten Betrieb des Verfahrens sicherstellen zu können, werden einer einzigen Teilidentität verschiedene Teilnehmer zugeordnet.

Die Teilidentitäten können von den Teilnehmern selbst oder von anderen Institutionen erstellt und im Kommunikationssystem hinterlegt werden. Um einen personalisierbaren Zugang zu einer Einrichtung zu erhalten, kann der Teilnehmer selbst eine Teilidentität auswählen.

Um dem Teilnehmer jedoch das manuelle Auswählen einer Teilidentität zu ersparen, kann dem Teilnehmer automatisch vom Kommunikationssystem eine Teilidentität unter Ansprechen auf vorbestimmte Parameter zugeordnet werden. Die automatische Zuordnung einer Teilidentität kann beispielsweise unter Ansprechen auf Informationen über den Ort, die Art und Zeit des Zugangs oder die IP-Adresse eines Endgeräts erfolgen.

Je nach Implementierung des Kommunikationssystems können die Teilidentitäten zentral abgelegt oder dezentral in verschiedenen Rechnern des Kommunikationssystems abgespeichert werden.

Teilidentitäten werden angelegt, indem ihnen wenigstens ein teilnehmerspezifisches Attribut zugeordnet wird. Bei den Attributen kann es sich um die Adresse des Teilnehmers, um einen Hinweis, ob der Teilnehmer privat oder geschäftlich auf einen Dienst zugreifen will, andere teilnehmerspezifische Daten und Berechtigungen handeln.

Durch die Verwendung einrichtungsübergreifender Teilidentitäten ist es möglich, einen Teilnehmer einen personalisierten Zugang zu einem gewünschten Dienst, System und/oder zu einer gewünschten Anwendung bereitzustellen, wobei in diesem Fall die Einrichtung rollenspezifisch reagieren, d. h. in Abhängigkeit von den in der Teilidentität enthaltenen Attribute ausgeführt werden kann.

Hierbei kann die ausgewählte Einrichtung unter Verwendung des Identifizierungscodes wenigstens ein teilnehmerspezifisches Attribut der zugeordneten Teilidentität abfragen. Handelt es sich bei der Einrichtung beispielsweise um einen Onlineshop-Dienst, bei dem Bücher gekauft werden können, kann dieser Dienst unter Verwendung des Identifizierungscodes beispielsweise die Adresse des zugehörigen Teilnehmers anfordern.

Das Verfahren kann beispielsweise auf das sogenannte Single-Sign-On-Protokoll zugreifen, mit dessen Hilfe ein Teilnehmer sich einmalig am Kommunikationssystem anmelden kann, um Zugang zu einer Gruppe von Einrichtungen erhalten zu können.

Vorzugsweise enthält das Kommunikationssystem eine Verwaltungseinrichtung, die auch als Identifikationsmanagementsystem bezeichnet werden kann. Diese Verwaltungseinrichtung dient dazu, die am Kommunikationssystem authentisierten Teilnehmer und die ihnen zugeordneten Teilidentitäten sowie die den Teilidentitäten zugeordneten Identifikationscodes zu verwalten.

Gemäß einem besonderen Ausführungsbeispiel umfasst das Kommunikationssystem das Internet, wobei die Einrichtungen vorzugsweise Web-basierte Anwendungen und/oder Dienste enthalten.

Das oben genannte technische Problem wird ebenfalls durch die Merkmale des Anspruchs 11 gelöst.

Danach ist ein Kommunikationssystem zum Bereitstellen eines personalisierbaren Zugangs zu einer Gruppe von Diensten und/oder Anwendungen vorgesehen. Das Kommunikationssystem weist wenigstens ein Kommunikationsnetz, insbesondere das Internet auf, über das wenigstens ein Teilnehmer kommunizieren kann. An das Kommunikationsnetz sind mehrere, Dienste und/oder Anwendungen bereitstellende Rechner angeschlossen. Eine Verwaltungseinrichtung des Kommunikationssystems weist eine erste Authenitiserungseinrichtung zum Authentisieren wenigstens eines Teilnehmers am Kommunikationssystem, eine erste Zuordnungseinrichtung zum Zuordnen wenigsten einer Teilidentität zu einem authentisierten Teilnehmer, eine zweite Zuordnungseinrichtung zum Zuordnen eines Identitfizierungscodes zur Teilidentität sowie eine zweite Authentisierungseinrichtung zum Authentisieren eines Teilnehmers an einem Dienste und/oder Anwendungen bereitstellenden Rechner auf.

Um einen schnellen Zugriff auf den authentisierten Teilnehmer, die Teilidentitäten und die Identifizierungscodes zu erhalten, ist in der Verwaltungseinrichtung eine Speichereinrichtung vorgesehen, in der eine Tabelle abgelegt ist, die jedem authentisierten Teilnehmer wenigstens eine Teilidentität und jeder Teilidentität einen Identifizierungscode zuordnet.

Dank der dienst- und/oder anwendungsübergreifenden Zuordnung von Teilidentitäten zu Teilnehmer wird die Möglichkeit geschaffen, rollenspezifische Dienste und/oder Anwendungen in Abhängigkeit von einer einem authentisierten Teilnehmer zugeordneten Teilidentität in einem Rechner auszuführen.

Die Erfindung wird nachfolgend anhand eines Ausführungsbeispiels in Verbindung mit den beiliegenden Zeichnungen näher erläutert. Es zeigen:
- Fig. 1: ein schematisches Blockschaltbild eines Kommunikationssystems, in welchem die Erfindung verwirklicht ist, und
- Fig. 2: eine beispielhafte Darstellung einer Teilidentität oder einer Rolle eines Teilnehmers.

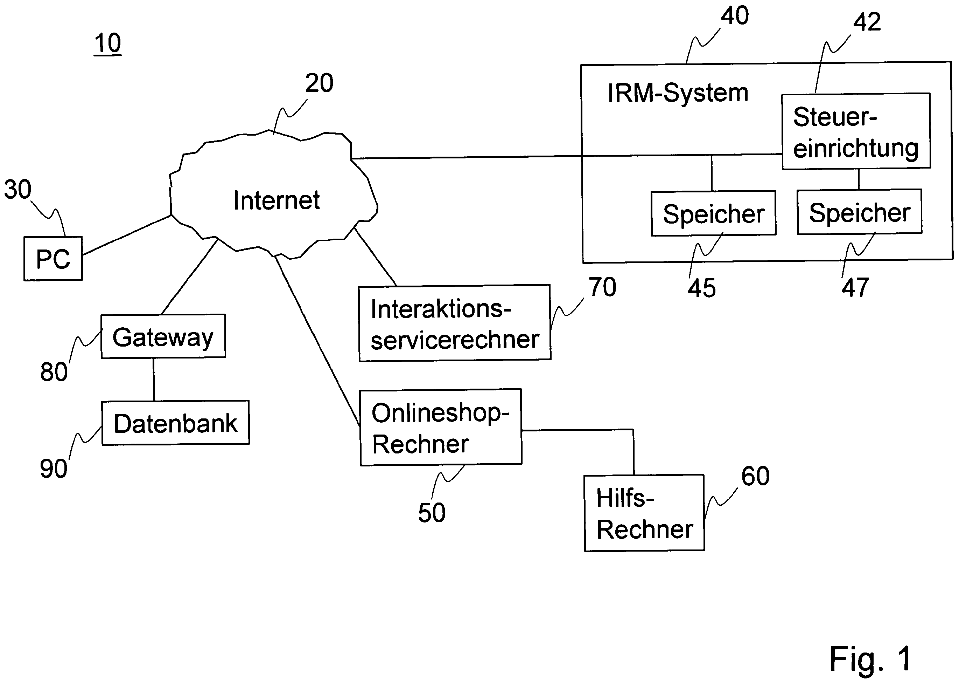

Fig. 1 zeigt ein beispielhaftes Kommunikationssystem 10, welches zumindest ein Kommunikationsnetz, im vorliegenden Beispiel das Internet 20 umfaßt. An das Internet 20 ist lediglich der einfachen Darstellung wegen nur eine Kommunikationsendeinrichtung, wie zum Beispiel ein Personalcomputer 30 eines Nutzers angeschlossen. Weiterhin ist ein Datenverwaltungssystem 40 mit dem Internet 20 verbunden. Das Datenverwaltungssystem 40 wird nachfolgend auch Identitäts- und Rollenmanagementsystem, kurz IRM-System genannt. Angemerkt sei, dass das Datenverwaltungssystem 40 als zentrale Rechnereinheit aufgebaut sein kann. Vorzugsweise enthält jedoch das IRM-System 40 mehrere zusammenwirkende Rechner und Speichereinrichtungen, die ein eigenes Netzwerk bilden oder verteilt über das Internet 20 miteinander verbunden sein können.

Mit dem Internet 20 ist der einfachen Darstellung wegen lediglich ein einziger Dienste und/oder Anwendungen bereitstellender Rechner 50 verbunden. Der über den Rechner 50 angebotene Dienst ist beispielsweise ein Online-Shop-Dienst, bei dem zum Beispiel Bücher gekauft werden können.

In der Praxis sind mehrere dienstanbietende Rechner am Internet 20 angeschlossen. Diese Rechner bilden eine Gruppe, auf die ein Nutzer unter Verwendung einer einzigen Teilidentität oder Rolle zugreifen kann. Dem Online-Shop-Rechner 50 kann ein sogenannter Discovery-Service-Rechner 60, kurz Hilfsrechner genannt, zugeordnet sein. Mit Hilfe des Hilfsrechners 60 kann der Online-Shop-Rechner 50 erfahren, wo Teilidentitäten, auch Rollen genannt, und/oder die darin enthaltenen teilnehmerspezifischen Attribute im Kommunikationssystem 10 abgelegt worden sind.

Im vorliegenden Beispiel weist das IRM-System 40 eine Speichereinrichtung 45 auf, in der zum Beispiel die bereits authentisierten Teilnehmer und vorbestimmte Teilidentitäten hinterlegt sind. Weiterhin ist eine Speichereinrichtung 47 implementiert, in der eine Zuordnungstabelle hinterlegt ist, die einem authentisierten Teilnehmer eine Teilidentität und dieser Teilidentität einen Identifikationscode, auch Name Identifier oder Namensidentifizierer genannt, zuordnet. Die Teilidentitäten und/oder die dazugehörenden Attribute können, wie bereits gesagt, im IRM-System 40 hinterlegt sein oder über einen speziellen Interaktionsdiensterechner 70, der mit dem Internet 20 verbunden ist, verwaltet werden. Alternativ können Teilidentitäten und/oder deren Attribute in einem separaten Kommunikationssystem oder einer separaten Datenbank 90 abgelegt sein, welche beispielsweise über ein Gateway 80 mit dem Internet 20 verbunden ist. Das IRM-System 40 weist eine programmierbare Steuereinrichtung 42 auf, die zum Authentisieren eines Nutzer gegenüber dem IRM-System 40 und zum Authentisieren des Nutzers gegenüber dem auf dem Rechner 50 implementierten Onlinshop-Dienst ausgebildet ist. Ferner steuert die Steuereinrichtung 42 die Auswahl oder Zuordnung einer Teilidentität zu einem Nutzer und die Zuordnung eines Identifizierungscodes, auch Name Identifier genannt, zu einer Teilidentität.

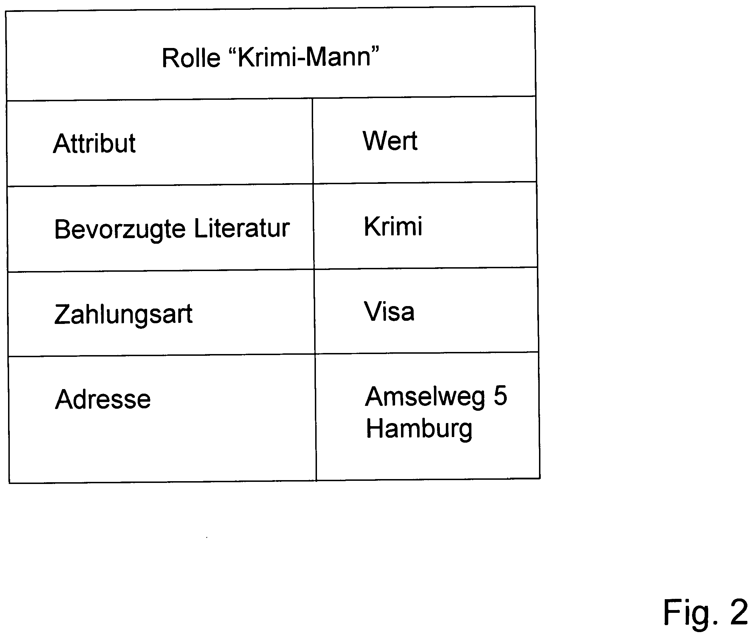

Fig. 2 zeigt eine beispielhafte Teilidentität, die im Speicher 45 des IRM-Systems 40 hinterlegt ist. Der beispielhaften Teilidentität oder Rolle ist der Identifikationscode "Krimi-Mann" zugeordnet worden. Die Teilidentität "Krimi-Mann" enthält mehrere Attribute, wie z. B. "bevorzugte Literatur" mit dem Wert "Krimi", "Zahlungsart" mit dem Wert "Visa" und "Adresse" mit dem Wert "Amselweg 5, Hamburg. Angemerkt sei an dieser Stelle, dass die erstellten Teilidentitäten entweder von Teilnehmern selbst oder von einer zentralen Stelle aus erzeugt und zum IRM-System 40 übertragen werden.

Nachfolgend wird die Funktionsweise des in Fig. 1 dargestellten Kommunikationssystems 10 anhand eines beispielhaften Szenarios näher erläutert.

Mit dem IRM-System 40, welches sowohl für eine Identitätsals auch einer Rollenverwaltung sorgt, kann einem Nutzer Zugang zu mehreren Web-basierten Diensten basierend auf einer einzigen dem Nutzer zugewiesenen Teilidentität gewährt werden. Die verschiedenen Web-basierten Dienste oder Anwendungen können auf dem Rechner 50 oder auf separaten Rechnern implementiert sein.

Zunächst sei angenommen, dass ein Nutzer mit Hilfe des Personalcomputers 30 mehrere Teilidentitäten erstellt, indem er jeder Teilidentität mehrere Nutzer-spezifische Attribute zuordnet. Die Teilidentitäten werden zusammen mit den dazugehörenden Attributen vom Personalcomputer 30 über das Internet 20 zum IRM-System 40 übermittelt und dort in den Speicher 45 geschrieben. In dem Speicher sind üblicherweise die Teilidentitäten mehrerer Nutzer und gegebenenfalls nutzerübergreifende Teilidentitäten hinterlegt. Jeder Teilidentität wird von dem IRM-System 40 ein Identifizierungscode zugeordnet. Beispielsweise wird der in Fig. 2 dargestellten Teilidentität der Identifizierungscode "Krimi-Mann" zugeordnet.

Angenommen sei nunmehr, dass der Nutzer über seinen Personalcomputer 30 und das Internet 20 eine Verbindung zum Rechner 50 hergestellt hat, da er über den im Rechner 50 implementierten Online-Shop-Dienst Bücher bestellen möchte. Der Online-Shop-Dienst erkennt, dass der Nutzer ihm nicht bekannt ist. Daraufhin leitet der Online-Shop-Rechner 50 beispielsweise eine HTTP-Redirect-Nachricht zusammen mit der Rücksprungadresse des Online-Shop-Rechners 50 über das Internet 20 zum IRM-System 40. Die HTTP-Redirect-Nachricht enthält beispielsweise eine Authentisierungsaufforderung entsprechend dem SAML-Protokoll, mit der beim IRM-System 40 eine Bestätigung für den anfragenden Kunden verlangt wird, dass dieser gegenüber dem IRM-System 40 authentisiert worden ist. Daraufhin fordert das IRM-System 40 den Nutzer am Personalcomputer 30 auf, sich zu authentisieren. Die Authentisierung kann unter Anwendung bekannter Authentisierungsprotokolle erfolgen.

Hierzu kann der Nutzer seinen Namen und ein Paßwort in ein am Personal Computer 30 angezeigtes Formular eingeben. Diese Daten werden vorzugsweise verschlüsselt über das Internet 20 zum IRM-System 40 übertragen und dort mit hinterlegten Nutzerdaten verglichen. Bei erfolgreicher Authentisierung des Nutzers werden die Daten, die den Nutzer als authentisierten Nutzer bestätigen, in den Speicher 45 geschrieben.

Nach erfolgreicher Authentisierung des Nutzers am IRM-System 40 wird gemäß einem ersten Beispiel der Nutzer aufgefordert, eine der gespeicherten Teilidentitäten auszuwählen. Die Aufforderung kann entweder vom IRM-System 40, vom Interaktionsservice-Rechner 70 oder von einem separaten Kommunikationssystem, welches über das Gateway 80 mit dem Internet 20 verbunden ist, erfolgen. Im vorliegenden Beispiel sei nunmehr angenommen, dass das IRM-System 40 eine Aufforderungsnachricht über das Internet 20 zum Personalcomputer 30 schickt, um den Nutzer aufzufordern, eine Teilidentität auszuwählen. Hierzu werden dem Nutzer die erstellten Teilidentitäten an seinem Personal Computer 30 angezeigt. Der Nutzer wählt beispielsweise die Teilidentität mit dem Identifikationscode "Krimi-Mann" aus. Nunmehr wird in dem Speicher 47 des IRM-Systems 40 eine Zuordnung zwischen dem Nutzer, der ausgewählten Teilidentität und dem dieser Teilidentität zugeordneten Identifizierungscode abgelegt.

Eine vorbestimmte Teilidentität kann dem Nutzer aber auch automatisch in Abhängigkeit vorbestimmter Parametern vom IRM-System 40 zugeordnet werden. Die automatische Vergabe einer Teilidentität an einen Nutzer kann zum Beispiel in Abhängigkeit vom Ort oder der Zeit der Anfrage erfolgen.

Nach erfolgreicher Authentisierung des Nutzers am IRM-System 40 sendet das IRM-System 40 die gewünschte Zusicherung, beispielsweise gemäß dem SAML-Protokoll, zusammen mit dem Identifizierungscode der vergebenen Teilidentität des Nutzers zum Online-Shop-Rechner 50 zurück. Auf diese Weise wird der Nutzer auch gegenüber dem Online-Shop-Rechner 50 und somit gegenüber dem Onlineshop-Dienst authentisiert. Die Anonymität des Nutzers gegenüber dem Online-Shop-Dienst bleibt gewahrt, da das Paßwort zu keiner Zeit an den Online-Shop-Rechner 50 weitergegeben wird.

Unter Steuerung der Teilidentität des Nutzers kann der Online-Shop-Dienst rollenspezifisch ausgeführt werden. So kann der Online-Shop-Dienst über den Rechner 50 und das Internet 20 das IRM-System 40 auffordern, den Wert "Krimi" des Attributes "bevorzugte Literatur" mitzuteilen. Bei der Anfrage überträgt der Onlineshop-Rechner 50 lediglich den Identifizierungscode zum IRM-System 40. Da das IRM-System 40 den Identifizierungscode kennt, kann es den Identifizierungcode der entsprechenden Teilidentität des Nutzers zuordnen und den Wert "Krimi" des Attributes "bevorzugte Literatur" über das Internet 20 zum Rechner 50 übertragen. Daraufhin kann der auf dem Rechner 50 implementierte Online-Shop-Dienst dem Nutzer an seinem Personalcomputer 30 einen entsprechenden Literaturvorschlag zum Thema Krimi unterbreiten. Nach dem der Nutzer ein vorgeschlagenes Buch ausgewählt hat, fordert der auf dem Rechner 50 implementierte Online-Shop-Dienst das IRM-System 40 unter Übersendung des Identifizierungscodes auf, nunmehr den Inhalt des Attributes "Adresse" aus der Teilidentität "Krimi-Mann" mitzuteilen. Unter Ansprechen auf die übermittelte Adresse kann nunmehr der auf dem Rechner 50 implementierte Online-Shop-Dienst einen Lieferdienst veranlassen, dass bestellte Buch zum Nutzer zu liefern.

Mit der Teilidentität "Krimi-Mann" kann der Nutzer auch andere Dienste auf anderen Rechnern nutzen, ohne sich erneut am IRM-System 40 authentisieren und eine neue Teilidentität auswählen zu müssen.

Wählt nunmehr der am IRM-System 40 authentisierte Nutzer anstelle der Teilidentität "Krimi-Mann" beispielsweise die Teilidentität "Steuerfachmann" aus, wird der auf dem Rechner 50 implementierte Online-Shop-Dienst durch andere Attributwerte gesteuert. Auf diese Weise werden die Dienste, auf die der Nutzer entsprechend der ausgewählten Teilidentität zugreifen kann, nicht nur personalisiert, sondern auch an dessen aktuelle Situation, die durch den Inhalt der Teilidentität definiert ist, angepaßt.

Die im IRM-System 40 hinterlegten Teilidentitäten sorgen dafür, dass einem Nutzer eine Teilanonymität gegenüber einer angeforderten Anwendung oder einem angeforderten Dienst gewährleistet wird, da nur die in der Teilidentität enthaltenen Attribute dem angeforderten Dienst oder der angeforderten Anwendung zu Verfügung gestellt werden. Das IRM-System 40 erhöht somit den Schutz der Privatsphäre eines Nutzers.

## Patentansprüche

1. Verfahren zum Bereitstellen eines personalisierbaren Zugangs zu einer Gruppe von Einrichtungen wenigstens einem Teilnehmer eines Kommunikationssystems, mit folgenden Verfahrensschritten:
a) ein Teilnehmer authentisiert sich einmalig am Kommunikationssystem (10), wodurch dieser die Zugangsberechtigung auf die Gruppe von Einrichtungen (50) erhält;
b) dem authentisierten Teilnehmer wird aus einer Vielzahl von vorbestimmten Teilidentitäten eine Teilidentität zugeordnet;
c) der vorbestimmten Teilidentität wird ein Identifizierungscode zugeordnet;
d) der Teilnehmer wählt eine Einrichtung aus der Gruppe aus;
e) unter Verwendung des Identifizierungscodes wird der Teilnehmer gegenüber der ausgewählten Einrichtung authentisiert; und
f) in Abhängigkeit von der dem Identifizierungscode zugeordneten Teilidentität wird dem authentisierten Teilnehmer der Zugang zu der ausgewählten Einrichtung bereitgestellt.

2. Verfahren nach Anspruch 1,
**dadurch gekennzeichnet, dass**
wenigstens eine Teilidentität verschiedenen Teilnehmern zugeordnet werden kann.

3. Verfahren nach Anspruch 1 oder 2,
**dadurch gekennzeichnet, dass**
eine Teilidentität vom Teilnehmer ausgewählt oder
automatisch vom Kommunikationssystem unter Ansprechen auf vorbestimmte Parameter dem Teilnehmer zugeordnet wird.

4. Verfahren nach einem der Ansprüche 1 bis 3,
**dadurch gekennzeichnet, dass**
die Teilidentitäten zentral oder dezentral im Kommunikationssystem abgespeichert werden und jeweils wenigstens ein teilnehmerspezifisches Attribut enthalten.

5. Verfahren nach einem der Ansprüche 1 bis 4, **dadurch gekennzeichnet, dass**
die ausgewählte Einrichtung unter Verwendung des Identifizierungscodes wenigstens ein teilnehmerspezifisches Attribut der zugeordneten Teilidentität abfragt.

6. Verfahren nach einem der Ansprüche 1 bis 5, **dadurch gekennzeichnet, dass**
der Teilnehmer gemäß Verfahrensschritt 1a) an einer dem Kommunikationssystem zugeordneten Verwaltungseinrichtung, insbesondere unter Anwendung des Single-Sign-On-Protokolls, authentisiert wird.

7. Verfahren nach Anspruch 6, **dadurch gekennzeichnet, dass**
die am Kommunikationssystem authentisierten Teilnehmer und die ihnen zugeordneten Teilidentitäten in der Verwaltungseinrichtung verwaltet werden.

8. Verfahren nach einem der Ansprüche 1 bis 7, **dadurch gekennzeichnet, dass**
das Kommunikationssystem das Internet enthält und dass die Einrichtungen webbasierte Anwendungen und/oder Dienste umfassen.

9. Kommunikationssystem (10) zum Bereitstellen eines personalisierbaren Zugangs zu einer Gruppe von Diensten und/oder Anwendungen wenigstens einem Teilnehmer, mit
wenigstens einem Kommunikationsnetz (20), insbesondere dem Internet, über das wenigstens ein Teilnehmer (30) kommunizieren kann,
mehreren Dienste und/oder Anwendungen bereitstellenden Rechnern (50), die am Kommunikationsnetz (20) angeschlossen sind,
einer Verwaltungseinrichtung (40), die eine erste Authentisierungseinrichtung zum Authentisieren wenigstens eines Teilnehmers am Kommunikationssystem, eine erste Zuordnungseinrichtung zum Zuordnen wenigstens einer Teilidentität zu einem authentisierten Teilnehmer, eine zweite Zuordnungseinrichtung zum Zuordnen eines Identifizierungscodes zur Teilidentität und eine zweite Authentisierungseinrichtung zum Authentisieren eines Teilnehmers an einem Dienste und/oder Anwendungen bereitstellenden Rechner aufweist,
wobei die Dienste und/oder Anwendungen bereitstellenden Rechner (50) einen ausgewählten Dienst oder eine ausgewählte Anwendung in Abhängigkeit von einer einem authentisierten Teilnehmer zugeordneten Teilidentität ausführen.

10. Kommunikationssystem nach Anspruch 9, **dadurch gekennzeichnet, dass**
die Verwaltungseinrichtung (40) eine
Speichereinrichtung (45) aufweist, in der eine Tabelle abgelegt ist, die jedem authentisierten Teilnehmer wenigstens eine Teilidentität zuordnet.

## Claims

1. A method for providing a personalizable access to a group of devices to at least one subscriber of a communication system, comprising the following method steps:
a) a subscriber authenticates himself once to the communication system (10), thereby gaining access authorisation to the group of devices (50);
b) a partial identity out of a plurality of predefined partial identities is assigned to the authenticated subscriber;
c) an identification code is assigned to the predefined partial identity;
d) the subscriber selects a device from the group;
e) the subscriber is authenticated to the selected device using the identification code; and
f) based on the partial identity assigned to the identification code, the authenticated subscriber is provided with access to the selected device.

2. The method according to claim 1, **characterized in that** at least one partial identity can be assigned to different subscribers.

3. The method according to claim 1 or 2,
**characterized in that**
a partial identity is selected by the subscriber or is automatically assigned to the subscriber by the communication system in response to predetermined parameters.

4. The method according to any one of claims 1 to 3,
**characterized in that**
the partial identities are stored in centralized or
decentralized manner in the communication system and each contain at least one subscriber-specific attribute.

5. The method according to any one of claims 1 to 4,
**characterized in that**
the selected device queries at least one subscriber-specific attribute of the assigned partial identity using the identification code.

6. The method according to any one of claims 1 to 5,
**characterized in that**
according to method step 1a), the subscriber is authenticated on an administration device associated with the communication system, in particular using the single sign-on protocol.

7. The method according to claim 6, **characterized in that** the subscribers authenticated to the communication system and the partial identities assigned to them are managed in the administration device.

8. The method according to any one of claims 1 to 7,
**characterized in that**
the communication system includes the Internet, and that the devices comprise web-based applications and/or services.

9. A communication system (10) for providing a personalizable access to a group of services and/or applications for at least one subscriber, comprising at least one communication network (20), in particular the Internet, via which at least one subscriber (30) is able to communicate;
a plurality of computers (50) providing services and/or applications, which are connected to the communication network (20);
an administration device (40) which comprises a first authentication means for authenticating at least one subscriber to the communication system, a first assignment means for assigning at least one partial identity to an authenticated subscriber, a second assignment means for assigning an identification code to the partial identity, and a second authentication means for authenticating a subscriber to a computer that provides services and/or applications;
wherein the computers (50) providing services and/or applications perform a selected service or a selected application in response to a partial identity assigned to an authenticated subscriber.

10. The communication system according to claim 9, **characterized in that**
the administration device (40) includes a memory device (45) which stores a table assigning at least one partial identity to each authenticated subscriber.

## Revendications

1. Procédé permettant de fournir un accès personnalisable à un groupe de dispositifs à au moins un abonné d'un système de communication, comprenant les étapes de procédé suivantes :
a) un abonné s'authentifie une seule fois sur le système de communication (10), ce qui a pour effet que celui-ci reçoit l'autorisation d'accès au groupe de dispositifs (50) ;
b) une identité partielle parmi une pluralité d'identités partielles prédéfinies est affectée à l'abonné authentifié ;
c) un code d'identification est affecté à l'identité partielle prédéfinie ;
d) l'abonné sélectionne un dispositif dans le groupe ;
e) au moyen du code d'identification, l'abonné est authentifié par rapport au dispositif sélectionné ; et
f) en fonction de l'identité partielle affectée au code d'identification, l'accès au dispositif sélectionné est fourni à l'abonné authentifié.

2. Procédé selon la revendication 1, **caractérisé en ce qu'**au moins une identité partielle peut être affectée à différents abonnés.

3. Procédé selon la revendication 1 ou 2, **caractérisé en ce qu'**une identité partielle est sélectionnée par l'abonné ou affectée automatiquement à l'abonné par le système de communication en réponse à des paramètres prédéfinis.

4. Procédé selon l'une quelconque des revendications 1 à 3, **caractérisé en ce que** les identités partielles sont mises en mémoire de manière centralisée ou décentralisée dans le système de communication et contiennent chacune au moins un attribut spécifique à l'abonné.

5. Procédé selon l'une quelconque des revendications 1 à 4, **caractérisé en ce que** le dispositif sélectionné, au moyen du code d'identification, consulte au moins un attribut spécifique à l'abonné de l'identité partielle affectée.

6. Procédé selon l'une quelconque des revendications 1 à 5, **caractérisé en ce que** l'abonné est authentifié conformément à l'étape de procédé la) sur un dispositif de gestion affecté au système de communication, en particulier au moyen du protocole d'authentification unique.

7. Procédé selon la revendication 6, **caractérisé en ce que** les abonnés authentifiés sur le système de communication et les identités partielles qui leur sont affectées sont gérés dans le dispositif de gestion.

8. Procédé selon l'une quelconque des revendications 1 à 7, **caractérisé en ce que** le système de communication contient Internet et **en ce que** les dispositifs comportent des applications et/ou des services basés sur le Web.

9. Système de communication (10) pour la fourniture d'un accès personnalisable à un groupe de services et/ou d'applications à au moins un abonné, comprenant :
au moins un réseau de communication (20), en particulier Internet, par l'intermédiaire duquel au moins un abonné (30) peut communiquer,
plusieurs ordinateurs (50) qui fournissent des services et/ou des applications et qui sont raccordés au réseau de communication (20),
un dispositif de gestion (40), qui présente un premier dispositif d'authentification pour l'authentification d'au moins un abonné sur le système de communication, un premier dispositif d'affectation pour l'affectation d'au moins une identité partielle à un abonné authentifié, un deuxième dispositif d'authentification pour l'affectation d'un code d'identification à l'identité partielle et un deuxième dispositif d'authentification pour l'authentification d'un abonné sur un ordinateur fournissant des services et/ou des applications,
dans lequel les ordinateurs (50) fournissant des services et/ou des applications exécutent un service sélectionné ou une application sélectionnée en fonction d'une identité partielle affectée à un abonné authentifié.

10. Système de communication selon la revendication 9, **caractérisé en ce que** le dispositif de gestion (40) présente un dispositif de mise en mémoire (45) dans lequel est mise en mémoire une table qui affecte au moins une identité partielle à chaque abonné authentifié.
